# DEMANDE DE BREVET EUROPEEN

(11) **EP 4 755 591 A1**
(43) Date de publication de la demande: **10.06.2026**
(21) Numéro de dépôt: 25221553.8
(22) Date de dépôt: 08.12.2025
(51) Int. Cl.: B25J 9/00, B25J 9/10, F16L 55/26, F16L 55/40

(54) **ROBOT PARALLÈLE RIGIDE**

(30) Priorité: 06.12.2024 FR 2413575
(71) Demandeur: Commissariat à l'Energie Atomique et aux Energies Alternatives, 75015 Paris (FR)
(72) Inventeur: VENUTI, Léo, 91191 Gif-sur-Yvette Cedex (FR); BLANC, Pierre-Bruno Marie, 91191 Gif-sur-Yvette Cedex (FR)
(74) Mandataire: Hautier IP

(57) **Abrégé**

L'invention concerne un robot parallèle (1) s'étendant suivant un axe longitudinal principal (X), caractérisée en ce qu'il comprend un premier bâti (10), un deuxième bâti (20) monté sur le premier bâti avec une liaison pivot, une plateforme mobile (30) reliée au deuxième bâti par une première (41), une deuxième (42) et une troisième bielle (43), et comprenant un premier (50a) et un deuxième (50b) élément de déplacement respectivement reliés par une liaison pivot à la première et à la deuxième bielle et par une liaison glissière au deuxième bâti, chacune des bielles étant articulée par une liaison pivot et reliée à un élément de liaison (50c) positionné sur la plateforme de sorte que le déplacement des éléments permet de translater la plateforme, et le déplacement du deuxième bâti permet de réaliser une rotation (R) de la plateforme autour de l'axe longitudinal principal.

## Description

### DOMAINE TECHNIQUE

La présente invention concerne le domaine de la robotique et plus précisément le domaine des robots parallèles aussi appelés architectures robotiques parallèles. Elle trouve pour application particulièrement avantageuse le domaine de l'usinage réalisé par une architecture robotique parallèle dans un environnement difficile d'accès, notamment avec un espace radial restreint, telle la rénovation de tuyauterie par l'intérieur.

### ETAT DE LA TECHNIQUE

Il existe différentes architectures robotiques parallèles qui peuvent être employées dans des environnements restreints comme la rénovation de l'intérieur de tuyauteries.

Généralement, les architectures parallèles sont des machines robotiques composées de plusieurs chaînes cinématiques indépendantes, généralement des actionneurs télescopiques articulés en leurs deux extrémités sur un bâti et une plateforme mobile.

Un robot conventionnel de ce type est ainsi décrit dans le brevet US4732525. Le robot comprend trois dispositifs de réglage, en combinaison avec un tube central qui porte une tête de positionnement à l'une de ses extrémités. Le tube central offre trois degrés de liberté par rapport à la base de la machine. Chaque dispositif de réglage est relié à la tête de positionnement par une articulation à trois degrés de liberté et à la base de la machine par une articulation à deux degrés de liberté, de manière à permettre à la tête de positionnement de se déplacer dans une plage de travail limitée.

Ce type de robot permet d'effectuer des mouvements complexes.

Cependant, pour des applications impliquant l'engagement du robot dans un environnement dont la géométrie est contrainte radialement (comme l'intérieur d'une tuyauterie, surtout si le diamètre de la tuyauterie est faible) la rigidité torsionnelle du robot peut être insuffisante pour garantir la précision des opérations menées par le robot.

Cela est vrai notamment quand le robot doit être déployé dans la longueur de l'intérieur d'une tuyauterie (ou de manière générale d'un environnement contraint radialement), et effectuer par son actuateur des opérations impliquant des efforts dirigés radialement (par exemple : le fraisage de la paroi interne de la tuyauterie).

Un objet de la présente invention est donc de proposer une solution améliorant la précision d'un usinage réalisé dans un environnement encombré, notamment un environnement restreint radialement.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit un robot parallèle s'étendant suivant un axe longitudinal principal, caractérisé en ce qu'il comprend :
- un premier bâti s'étendant suivant l'axe longitudinal principal,
- un deuxième bâti monté sur le premier bâti avec une liaison pivot selon l'axe longitudinal principal,
- une plateforme mobile reliée au deuxième bâti par une première bielle, une deuxième bielle et une troisième bielle, chaque bielle étant articulée par une première extrémité sur le deuxième bâti et par une deuxième extrémité sur la plateforme mobile,
- un premier élément de déplacement et un deuxième élément de déplacement, le premier élément de déplacement étant relié par une liaison pivot à la première extrémité de la première bielle et étant également relié par une liaison glissière au deuxième bâti et le deuxième élément de déplacement étant relié par une liaison pivot à la première extrémité de la deuxième bielle et étant également relié par une liaison glissière au deuxième bâti, chacune desdites liaisons glissières étant configurée pour permettre une translation de la première extrémité de la première bielle et de la deuxième bielle parallèlement à l'axe longitudinal principal,

les deuxièmes extrémités respectives de la première et de la deuxième bielle étant chacune articulée sur la plateforme mobile par une liaison pivot respective et reliée à au moins un élément de liaison fixé sur ladite plateforme, la troisième bielle étant reliée par sa première extrémité par une liaison pivot à l'un parmi le premier élément de déplacement ou le deuxième élément de déplacement et par une liaison pivot de sa deuxième extrémité à un élément de liaison de la plateforme mobile, chaque liaison pivot présentant un axe de rotation, les axes de rotations des liaisons pivots des premières, deuxième et troisième bielles étant tous parallèles entre-eux et étant orthogonaux à l'axe longitudinal principal de sorte que le déplacement des premier et deuxième éléments de déplacement permet de déplacer la plateforme mobile dans un plan qui comprend l'axe longitudinal principal et dont la normale est parallèle aux axes de rotation des liaisons pivots des première, deuxième et troisième bielles, et
le déplacement du deuxième bâti par rapport au premier bâti permettant de réaliser une rotation de la plateforme mobile dans un plan orthogonal de l'axe longitudinal principal, par rapport au premier bâti.

Ainsi, l'invention propose une solution afin de réaliser un entretien dans un espace restreint. Plus précisément, l'invention propose une solution présentant une rigidité permettant de réaliser des efforts dirigés radialement et ce même avec un déploiement de l'invention dans une direction longitudinale. L'invention permet ainsi de réaliser un entretien interne des tuyaux tout en ayant une rigidité suffisante pour réaliser cette opération précisément.

L'utilisation de pivots dont les axes sont orthogonaux à l'axe longitudinal, plutôt que de rotules/demi cardans (contrainte technologique impliquée par de le choix d'architecture de nombreux systèmes parallèles) au niveau du système mécanique articulé permet d'assurer une bonne rigidité. L'invention proposée a aussi l'avantage de posséder moins d'articulations que de nombreuses d'architectures parallèles citées plus tôt ce qui réduit la possibilité de présence de jeu et de flexibilité au niveau des articulations. Et dans le cas de l'invention une seule liaison permet une rotation autour de l'axe longitudinal - ceci contribue à la rigidité du robot, particulièrement lorsqu'il est déployé dans la direction longitudinale.

Selon un autre aspect on prévoit un système de fraisage de tuyauterie comprenant un tuyau et un robot parallèle tel que défini ci-avant dans lequel le premier bâti est positionné et maintenu fixement par rapport au tuyau.

Ainsi l'invention propose une solution présentant une installation facilitée permettant d'assurer la position du robot dans le tuyau et la rigidité de celui-ci.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente une vue en coupe du tuyau intégrant le robot selon l'invention.
La figure 2 représente une vue du dessus du tuyau intégrant le robot selon l'invention.
La figure 3 représente une vue de face du tuyau intégrant le robot selon l'invention, le robot étant dans la configuration également représentée sur la figure 2.
La figure 4 représente une vue schématique du robot selon l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, la troisième bielle est reliée par sa première extrémité à l'un parmi le premier élément de déplacement ou le deuxième élément de déplacement et par une liaison pivot présentant un axe de rotation orthogonal à l'axe longitudinal principal de sa deuxième extrémité à un élément de liaison de la plateforme mobile.

Cela contribue à garder une rigidité suffisante pour le fonctionnement du robot. Cela permet additionnellement de garder la plateforme à un angle déterminé et d'assurer un bon fonctionnement de l'invention.

Selon un exemple, la troisième bielle est configurée pour maintenir l'effecteur du robot qui est porté par la plateforme mobile du robot, orienté dans une direction qui présente un angle fixe par rapport à l'axe longitudinal principal du robot.

Cette angle fixe peut prendre toute valeur. Il peut notamment être de 90°.

Ceci permet d'assurer un bon fonctionnement du robot et d'assurer une rigidité de l'ensemble du robot.

Ceci est avantageux, notamment dans les cas où l'effecteur travaille dans une direction orthogonale à l'axe longitudinal. En effet, dans le cas où l'angle est égal à 90°, un effecteur positionné sur la plateforme mobile dans une direction orthogonale à l'axe longitudinal (comme cela sera notamment représenté avec l'effecteur illustré sur les figures) est orienté dans une direction normale à la paroi du tuyau dans lequel le robot est engagé (en supposant que cette paroi ait la forme d'un cylindre) permettant ainsi d'effectuer par exemple un simple perçage. De plus, un mouvement de translation radial vers l'extérieur de la plateforme qui porte l'effecteur génère uniquement un effort de compression sur l'effecteur, sans flexion complémentaire. Cela entraîne une meilleure rigidité pour ce type d'action.

Ainsi de manière générale et selon un exemple, la troisième bielle est configurée pour maintenir une face de la plateforme mobile à un angle fixe par rapport à l'axe longitudinal principal. Cet angle peut être égal à 90° comme mentionné au paragraphe précédent. Mais de manière plus générale il est également possible de configurer le robot et notamment ses bielles pour que cet angle soit différent de 90°.

Cela permet ainsi de maintenir la rigidité du robot quel que soit l'angle désiré.

Selon un exemple, le premier bâti et le deuxième bâti sont cylindriques à base circulaire, le deuxième bâti entourant le premier bâti.

Cela permet ainsi de réaliser tous les mouvements de rotation de la plateforme autour de l'axe longitudinal, avec une seule liaison par pivot - limitant ainsi au maximum les jeux possibles De ce fait la rigidité du robot est optimisée.

Selon un exemple, la liaison pivot entre le premier bâti et le deuxième bâti est réalisée par deux roulements à contact obliques montés en « O ». L'entraxe entre ces deux roulements doit être la plus grande possible.

Cela permet ainsi d'assurer une reprise des efforts axiaux et radiaux ainsi qu'une bonne rigidité.

Selon un exemple, la rotation de la plateforme mobile est réalisée par un actionneur pris parmi un moteur avec réduction coaxial sans jeu à haut rapport de réduction ou un moteur couple-long en direct drive.

L'actionneur de cette rotation doit être sans jeu et doit permettre de fournir les efforts suffisants à l'usinage.

Selon un exemple, le premier et le deuxième élément de déplacement sont pris parmi des vérins électriques ou des moteurs linéaires.

Selon un exemple, les vérins électriques sont des vérins électriques à vis à billes ou vis trapézoïdal à rattrapage de jeu ou vis à rouleaux satellites.

Cela permet d'appliquer un effort suffisant pour déplacer la plateforme tout en présentant une rigidité axiale.

Selon un exemple, les premier et deuxième éléments de déplacement sont configurés pour être guidés en translation par des rails à billes ou deux douilles à billes installées en parallèles.

De préférence, les liaisons pivots doivent de préférence être faites chacune par deux roulements à billes séparés le plus possible.

Cela permet ainsi d'assurer une bonne rigidité du système.

Selon un exemple, les première, deuxième et troisième bielles s'étendent entre leur première extrémité et leur deuxième extrémité sur une longueur L, avec la longueur L fixe.

Cela permet de garder une grande rigidité axiale et radiale et ainsi assurer un bon fonctionnement du robot dans un environnement restreint radialement.

Selon un exemple, la plateforme mobile comprend un effecteur, l'effecteur s'étendant suivant une direction orthogonale à l'axe longitudinal principal. Selon un exemple, l'effecteur étant configuré pour réaliser un usinage d'un tuyau.

Cela permet ainsi de s'assurer que l'effecteur est toujours positionné de sorte à être dirigé vers la paroi interne du tuyau et ce en s'assurant que la rigidité est suffisante pour réaliser cet usinage.

Dans la suite de la description, le terme « sur » ne signifie pas nécessairement « directement sur ». Ainsi, lorsque l'on indique qu'une pièce ou qu'un organe A est en appui « sur » une pièce ou un organe B, cela ne signifie pas que les pièces ou organes A et B soient nécessairement en contact direct l'une avec l'autre. Ces pièces ou organes A et B peuvent être soit en contact direct soit être en appui l'une sur l'autre par l'intermédiaire d'une ou plusieurs autres pièces. Il en est de même pour d'autres expressions telle que par exemple l'expression « A agit sur B » qui peut signifier « A agit directement sur B » ou « A agit sur B par l'intermédiaire d'une ou plusieurs autres pièces ».

Dans la présente demande de brevet, le terme « mobile » correspond à un mouvement de rotation ou à un mouvement de translation ou encore à une combinaison de mouvements, par exemple la combinaison d'une rotation et d'une translation.

Dans la description détaillée qui suit, il pourra être fait usage de termes tels que « horizontal », « vertical », « longitudinal », « transversal », « supérieur », « inférieur », « haut », « bas », « avant », « arrière », « intérieur », « extérieur ». Ces termes doivent être interprétés de façon relative en relation avec la position normale du robot dans un tuyau, et la direction d'extension normale. Par exemple, les notions « horizontal » et « longitudinal » correspondent à la direction d'extension principale du robot et à la direction principale d'extension d'un tuyau.

On utilisera également un repère dont les directions transversales correspondent à l'ensemble des directions comprises dans le plan (Y,Z) et donc aux axes perpendiculaires à l'axe X et la direction longitudinale correspond à une direction parallèle à l'axe X. Ces directions s'entendent dans le cadre d'un repère fixe lié au premier bâti 10.

On définit un premier repère (X,Y,Z) fixe par rapport au premier bâti 10 dans lequel l'axe X est la direction longitudinale.

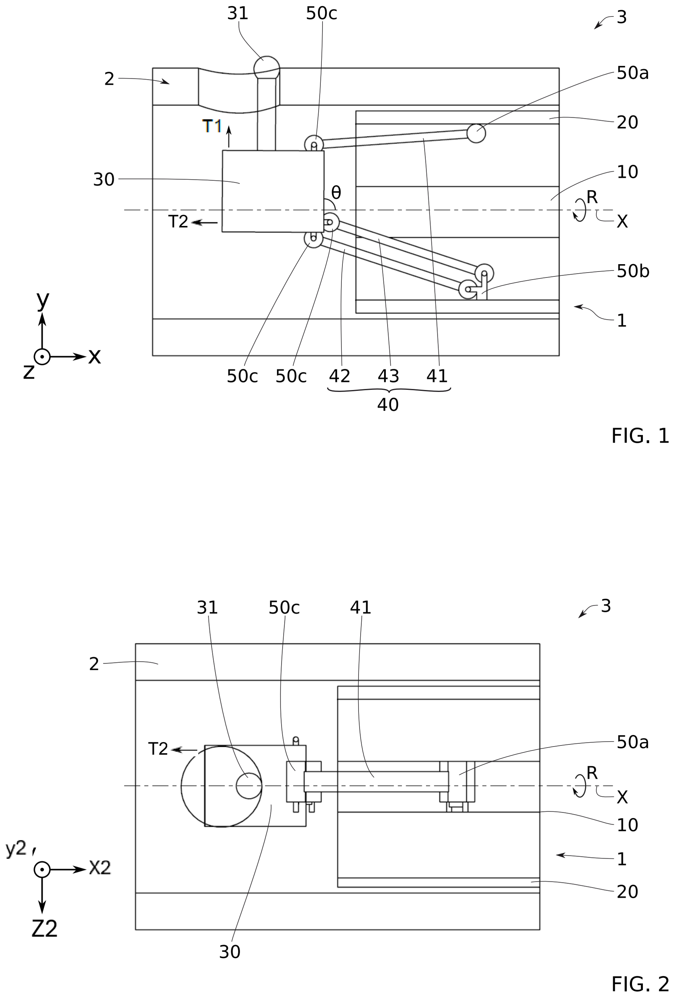

On pourra également utiliser un repère (X2, Y2, Z2), lié au deuxième bâti 20 qui suit une rotation d'axe X par rapport au repère (X, Y, Z) du premier bâti. Ce repère est par exemple illustré sur la figure 2. L'axe X2 est confondu avec l'axe X. Les axes Y2 et Z2 sont liés au deuxième bâti et définissent un plan transversal qui est perpendiculaire à l'axe X2.

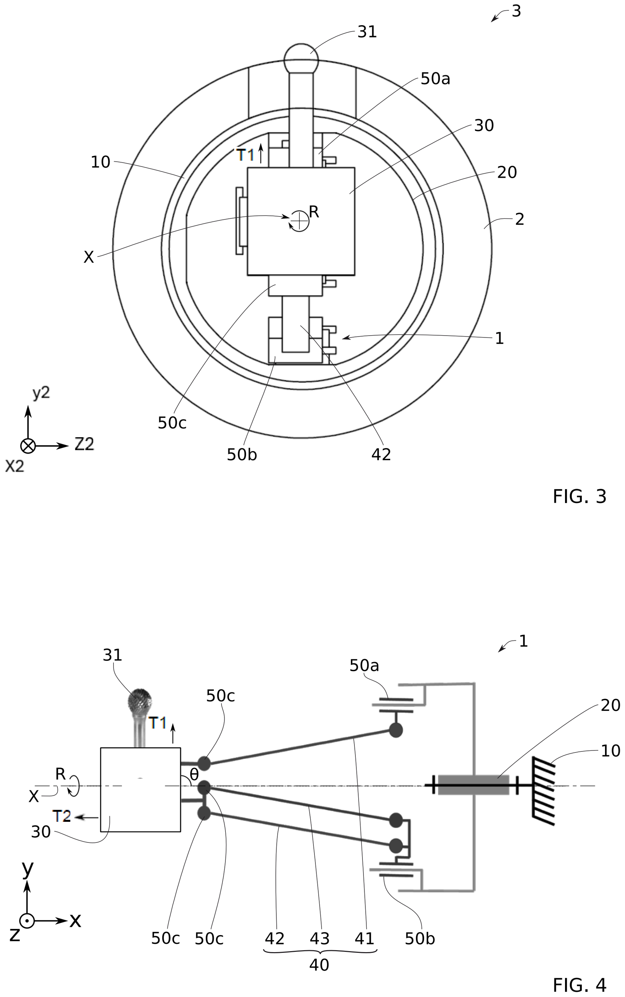

La présente invention concerne un robot parallèle 1. Un robot parallèle 1 suivant l'invention va maintenant être décrit en référence aux figures 1 à 4. De façon non limitative, le robot parallèle est représenté dans un tuyau 2.

De façon générale, le robot parallèle 1 s'étend suivant un axe longitudinal principal X. L'axe longitudinal principal X du robot parallèle 1 peut être confondu avec l'axe longitudinal du tuyau 2 dans lequel peut être positionné le robot parallèle 1.

Le robot 1 comprend en général un premier bâti 10. Le premier bâti 10 s'étend suivant l'axe longitudinal principal X. Avantageusement, le premier bâti 10 peut présenter des dimensions inférieures aux dimensions d'un tuyau 2. De plus, le premier bâti 10 peut présenter une structure cylindrique s'étendant suivant l'axe longitudinal principal X. La structure cylindrique peut présenter, de façon préférée, une base circulaire.

Le robot 1 comprend également un deuxième bâti 20. Le deuxième bâti 20 est monté sur le premier bâti 10. Plus précisément, le deuxième bâti 20 est monté sur le premier bâti 10 avec une liaison pivot selon l'axe longitudinal principal X. Le deuxième bâti 20 peut alors également présenter, comme le premier bâti 10, une structure cylindrique s'étendant suivant l'axe longitudinal principal X. Le déplacement du deuxième bâti 20 par rapport au premier bâti 10 permet ainsi de réaliser une rotation R du deuxième bâti 20 autour de l'axe longitudinal principal X, par rapport au premier bâti 10.

Le robot 1 comprend également une plateforme mobile 30. La plateforme 30 peut présenter une forme parallélépipédique. La forme parallélépipédique peut par exemple être cubique. La plateforme 30 peut présenter ainsi plusieurs faces. La plateforme 30 est reliée au deuxième bâti 20 par une pluralité de bielles 40. Plus précisément, la plateforme mobile 30 est reliée au deuxième bâti 20 par une première bielle 41, une deuxième bielle 42 et une troisième bielle 43.

Chacune des première, deuxième et troisième bielle 41, 42, 43, est articulée par une première extrémité respective sur le deuxième bâti 20.

Le robot 1 comprend un premier élément de déplacement 50a. Le robot comprend également un deuxième élément de déplacement 50b. Le premier élément de déplacement 50a et le deuxième élément de déplacement 50b peuvent être configurés pour déplacer la plateforme 30. Plus précisément, comme illustré en Figure 1, ils peuvent être configurés de sorte à déplacer la plateforme 30 de sorte à ce que la trajectoire de la plateforme 30 réalise au moins une translation T1, T2.

Le premier élément de déplacement 50a et le deuxième élément de déplacement 50b sont positionnés sur le deuxième bâti 20.

Les déplacements du premier élément de déplacement 50a et du deuxième élément de déplacement 50b sont commandés indépendamment l'un de l'autre. Chacun de ces éléments de déplacement 50a et 50b peut ainsi effectuer une translation par rapport au bâti 20, selon la direction longitudinale parallèle à l'axe X (par des liaisons glissières respectives qui relient le premier élément de déplacement 50a et le deuxième élément de déplacement 50b au deuxième bâti 20).

Les déplacements du premier élément de déplacement 50a et du deuxième élément de déplacement 50b sont commandés de manière synchronisée, pour que ces déplacements génèrent un mouvement désiré de la plateforme 30. Les déplacements du premier élément de déplacement 50a et du deuxième élément de déplacement 50b sont commandés de manière synchronisée pour que ces déplacements génèrent un mouvement désiré de l'effecteur positionné sur la plateforme 30.

Il est ainsi possible d'entraîner, par les mouvements contrôlés du premier élément de déplacement 50a et du deuxième élément de déplacement 50b, la plateforme 30 en translation.

Selon un exemple, un déplacement par translation selon l'axe longitudinal principal X des premier élément de déplacement 50a et deuxième élément de déplacement 50b dans des sens opposées peut entrainer une translation T1 de la plateforme 30 selon la direction transversale Y2, perpendiculaire à l'axe longitudinal X2. Cette translation T1 est illustrée sur la figure 1.L'axe longitudinal X2 étant confondu avec l'axe longitudinal principal X.

Selon un autre exemple, un déplacement par translation selon l'axe longitudinal principal X des premier élément de déplacement 50a et deuxième élément de déplacement 50b dans un même sens peut générer un déplacement, en translation T2, de la plateforme mobile 30 selon l'axe longitudinal principal X.

Plus précisément, le déplacement des premier élément de déplacement 50a et deuxième élément de déplacement 50b selon la direction longitudinale principale X entraine le déplacement de la plateforme 30 dans un plan comprenant l'axe longitudinal principal X, la normale audit plan étant parallèle aux axes de liaisons pivots des première 41, deuxième 42 et troisième 43 bielles.

Additionnellement, une rotation R du deuxième bâti 20 par rapport au premier bâti 10 déplace la plateforme 30 en rotation autour de l'axe longitudinal principal X. Ainsi suite à une rotation R du deuxième bâti 20, la plateforme 30 peut additionnellement par le mouvement des premier 50a et deuxième 50b éléments de déplacements, réaliser une première translation T1 suivant une direction Y2 et/ou réaliser au moins une deuxième translation T2 suivant une direction X2.

De préférence, le premier élément de déplacement 50a est configuré pour accueillir une bielle et le deuxième élément de déplacement 50b est configuré pour accueillir deux bielles. De préférence, le premier élément de déplacement 50a et le deuxième élément de déplacement 50b sont identiques. Dans le cas où le deuxième bâti 20 est cylindrique, le premier élément de déplacement 50a et le deuxième élément de déplacement 50b sont positionnés respectivement de façon diamétralement opposée. Cela permet ainsi de s'assurer d'une réalisation symétrique et d'une rigidité symétrique du robot 1.

Le premier élément de déplacement 50a est relié par une liaison pivot à la première extrémité de la première bielle 41. La liaison pivot de la première extrémité de la première bielle 41 par rapport au premier élément de déplacement 50a présente un axe de rotation autour d'un axe orthogonal à l'axe longitudinal principal X.

Additionnellement, le premier élément de déplacement 50a est relié par une liaison glissière au deuxième bâti 20. Cette liaison glissière permet de réaliser une translation du premier élément de déplacement 50a par rapport au deuxième bâti 20, le long d'un axe parallèle à l'axe longitudinal principal X.

De manière analogue au premier élément de déplacement 50a, le deuxième élément de déplacement 50b est relié par une liaison pivot à la première extrémité de la deuxième bielle 42. La liaison pivot de la première extrémité de la deuxième bielle 42 présente un axe de rotation autour d'un axe orthogonal à l'axe longitudinal principal X.. Additionnellement, le deuxième élément de déplacement 50b est relié par une liaison glissière au deuxième bâti 20. La liaison glissière permet de réaliser une translation du deuxième élément de déplacement 50b par rapport au deuxième bâti 20 le long d'un axe parallèle à l'axe longitudinal principal X.

Chacune desdites liaisons glissières peut être configurée pour permettre au moins une translation T1, T2 de la plateforme 30. Comme illustré en figure 1, une translation de la première extrémité de la première bielle 41 et de la deuxième bielle 42 est réalisée parallèlement à l'axe longitudinal principal X dans des sens opposés entraine une translation T1 de la plateforme 30 suivant un axe orthogonal à l'axe longitudinal principal X. Additionnellement, une translation de la première extrémité de la première bielle 41 et de la deuxième bielle 42 est réalisée parallèlement à l'axe longitudinal principal X dans un même sens entraine une translation T2 de la plateforme 30 suivant un axe parallèle à l'axe longitudinal principal X. Plus précisément, cette translation des éléments de déplacements 50a, 50b, est réalisée parallèlement à l'axe longitudinal principal X.

Chacune des première, deuxième et troisième bielle 41, 42, 43, est articulée par une deuxième extrémité sur la plateforme mobile 30.

Plus précisément, la deuxième extrémité de la première 41, de la deuxième 42 et de la troisième 43 bielle sont chacune articulées par une liaison pivot. La liaison pivot présente un axe de rotation orthogonal à l'axe longitudinal principal X. Les axes de rotations respectifs des liaisons pivots situées aux première et deuxième extrémités des première 41, deuxième 42 et troisième 43 bielles sont tous parallèles entre eux.

Et ces axes de rotations des liaisons pivots sont orthogonaux à l'axe longitudinal X.

Les deuxièmes extrémités de la première 41, de la deuxième 42 et de la troisième 43 bielle sont reliées à la plateforme mobile 30 par respectivement au moins un élément de liaison 50c positionné sur la plateforme mobile 30. Plus précisément, chacune des deuxièmes extrémités de la première 41, de la deuxième 42 et de la troisième 43 bielle sont reliées à un élément de liaison 50c. Le déplacement des premier 50a et deuxième 50b éléments de déplacement par translation entraine le déplacement par translation T1, T2 de la plateforme 30 dans un plan comprenant l'axe longitudinal principal X.

La plateforme mobile 30 est ainsi reliée au deuxième bâti 20, le déplacement du deuxième bâti 20 par rapport au premier bâti 10 permet ainsi de réaliser la rotation R de la plateforme mobile 30 autour de l'axe longitudinal principal X. Ainsi, c'est la rotation R entre le premier bâti 10 et le deuxième bâti 20 qui permet de déplacer la plateforme 30 dans un plan Y-Z perpendiculaire à l'axe longitudinal X.

Le robot 1 présente ainsi une architecture hybride avec deux axes en parallèle permettant de faire des mouvements de translation dans un plan (dans le cas du repère fixé au deuxième bâti 20 illustré en figure 2 le plan (Y2, Z2)) et un axe de rotation amont permettant de faire tourner ce plan autour de l'axe longitudinal X.

### Le premier 10 et deuxième bâti 20 :

Le premier bâti 10 et le deuxième bâti 20 sont, par exemple, cylindriques à base circulaire. Le deuxième bâti 20 entoure le premier bâti 10. De préférence, le premier bâti 10 et le deuxième bâti 20 sont concentriques avec l'axe principal longitudinal X. Pour ce faire le deuxième bâti 20 présente un diamètre extérieur supérieur ou égal, de préférence supérieur, à un diamètre intérieur du premier bâti 10. Le deuxième bâti 20 et le premier bâti 10 étant reliés par une liaison pivot, cette configuration permet de limiter au maximum les jeux possibles et les efforts radiaux entre ces deux bâtis, tout en autorisant la rotation R du deuxième bâti 20 autour de l'axe longitudinal X. De ce fait cela contribue à optimiser la rigidité du robot 1.

La liaison pivot entre le premier bâti 10 et le deuxième bâti 20 peut être réalisée par deux roulements à contact obliques montés en « O ». Les roulements permettent d'assurer une reprise des efforts axiaux selon l'axe X et radiaux selon les axes Y et Z. De plus les roulements permettent de participer à la bonne rigidité du deuxième bâti 20 par rapport au premier bâti 10 et donc du robot 1. De préférence, l'entraxe entre ces deux roulements doit être le plus grand possible. L'entraxe doit être au minimum supérieur ou égal et de préférence au moins 1,5 fois plus grand que la distance de porte-à-faux entre le dernier roulement et l'effecteur 31 dans sa position la plus dépliée possible. Cela assure d'avoir une longueur de guidage supérieure au porte-à-faux.

### Le premier 50a et deuxième 50b élément de déplacement :

La troisième bielle 43 est avantageusement reliée par sa première extrémité à l'un parmi le premier élément de déplacement 50a ou le deuxième élément de déplacement 50b. La troisième bielle 43 peut être reliée par sa première extrémité par une liaison pivot. La liaison pivot présentant un axe de rotation orthogonal à l'axe longitudinal principal X. Additionnellement, la troisième bielle 43 est reliée par sa deuxième extrémité par une liaison pivot présentant un axe de rotation orthogonal à l'axe longitudinal principal X à un élément de liaison 50c de la plateforme mobile 30. Cela contribue encore à la rigidité du robot 1. Cela permet additionnellement de garder la plateforme 30 à un angle déterminé Θ par rapport à l'axe longitudinal principal X et d'assurer un bon fonctionnement de l'invention. L'angle déterminé Θ est ainsi un angle qui reste fixe. Ainsi, l'angle déterminé Θ ne varie pas lorsque le robot 1 est en fonctionnement.

La troisième bielle 43 peut former avec l'un parmi la première bielle 41 ou la deuxième bielle 42 un quadrilatère. Plus précisément, le quadrilatère peut être formé par les premières et deuxièmes extrémités de la troisième bielle 43 et de l'une parmi la première 41 et la deuxième bielle 42.

Le premier 50a et le deuxième 50b élément de déplacement sont, par exemple, pris parmi des vérins électriques ou des moteurs linéaires.

Selon un exemple, les vérins électriques sont des vérins électriques à vis à billes ou vis trapézoïdal à rattrapage de jeu ou à vis à rouleaux satellites. Cela contribue à la rigidité tout en déplaçant la plateforme 30, et tout en présentant une rigidité axiale.

Les premier 50a et deuxième 50b éléments de déplacement peuvent être configurés pour être guidés en translation suivant une direction parallèle à l'axe longitudinal principal X par des rails à billes ou deux douilles à billes installées en parallèles.

De préférence, les liaisons pivots décrites doivent être faites chacune par deux roulements à billes séparés le plus possible. Ainsi, une bonne rigidité du système est assurée. Les deux roulements à billes peuvent ainsi être positionnés éloignés l'un de l'autre pour une meilleure reprise des efforts en torsion. Plus ils seront éloignés l'un de l'autre, meilleure sera cette reprise.

### La pluralité de bielles 40 :

La troisième bielle 43 est configurée avantageusement pour maintenir l'effecteur 31 du robot qui est porté par la plateforme mobile 30 du robot, orienté dans une direction qui présente un angle Θ fixe par rapport à l'axe longitudinal principal du robot.

A cet égard dans un mode de réalisation l'effecteur est fixe par rapport à la plateforme 30. Par conséquent le contrôle de l'orientation de la plateforme dans l'espace implique le contrôle de l'orientation de l'effecteur 31.

Dans un tel mode de réalisation dans lequel l'effecteur est fixe par rapport à la plateforme 30 la troisième bielle 43 est configurée avantageusement pour maintenir une face de la plateforme mobile 30 comprise dans un plan incliné d'un angle Θ désiré par rapport à l'axe longitudinal principal X.

Cet angle Θ peut notamment être de 90°.

Ce contrôle de l'orientation de la plateforme 30 avec un angle fixe par rapport à l'axe longitudinal X résulte du fait que les premières extrémités respectives des deux bielles 42 et 43 sont fixées (avec des liaisons pivotantes respectives) sur les moyens de déplacement 50b, et que les deuxièmes extrémités respectives des deux bielles 42 et 43 sont fixées sur la plateforme mobile 30 (également avec des liaisons pivotantes respectives).

Ceci conduit en effet à ce que les deux bielles 42, 43 forment les côtés opposés d'un quadrilatère déformable, dont les quatre coins sont les quatre extrémités des deux bielles 42, 43.

Lorsque les deux bielles 42, 43 sont de même longueur et sont disposées parallèlement l'une à l'autre, ce quadrilatère déformable est un parallélogramme déformable.

Cet exemple est en effet avantageusement mis en oeuvre en combinaison avec le fait que la troisième bielle 43 est reliée à au moins un des éléments de déplacements 50a, 50b. Ainsi, lors de la translation réalisée par les éléments de déplacements 50a, 50b, la plateforme est déplacée en gardant un angle Θ fixe par rapport à l'axe longitudinal principal X.. L'angle Θ peut être fixé par la longueur de la troisième bielle 43 par rapport à la longueur des première 41 et deuxième 42 bielle.

Cela permet ainsi de garder la plateforme 30 à un angle Θ, par exemple égal à 90°, par rapport à la direction longitudinale principal X du robot 1 et assurer un bon fonctionnement de celui-ci. Il est clair qu'ainsi, une face de la plateforme mobile 30 est maintenue à un angle Θ fixe par rapport à la direction longitudinale principale X du robot 1. Cet angle Θ peut être différent suivant une longueur choisie pour la troisième bielle 43. Une longueur de la troisième bielle 43 peut alors définir l'angle Θ fixe. Ce maintien à angle fixe permet de contribuer à la rigidité de l'ensemble du robot 1.

Selon un exemple, les première 41, deuxième 42 et troisième 43 bielles s'étendent chacune entre leur première extrémité et leur deuxième extrémité sur une même longueur L. La longueur L des bielles est de préférence fixe.

De préférence, la longueur L des première 41, deuxième 42 et troisième 43 bielles est identique pour les trois bielles. Dans le cas où la troisième bielle 43 présente une longueur L identique à la longueur L de la première bielle 41 et de la deuxième bielle 42 alors le quadrilatère formé est un parallélogramme.

De plus, la troisième bielle 43 forme les deux côtés opposés de ce parallélogramme avec la première bielle 41 ou avec la deuxième bielle 42 dans un plan perpendiculaire aux axes des liaisons pivot des bielles. Une longueur fixe permet de garder une grande rigidité axiale et radiale et ainsi assurer un bon fonctionnement du robot dans un environnement restreint radialement.

La longueur de la troisième bielle 43 peut être réglable afin de choisir l'angle Θ en fonction de l'application. De manière analogue, la longueur L de la troisième bielle 43 peut être différente des longueurs des première 41 et deuxième 42 bielles. On entend par réglable, une longueur sélectionnée de manière désirée mais fixe lors de l'utilisation du robot 1. Cette longueur L de troisième bielle 43 est en effet de préférence choisie en amont lors du montage du robot 1.

Ainsi, la longueur de la troisième bielle 43 peut être choisie en amont suivant l'utilisation du robot 1. La longueur de la troisième bielle 43 peut être choisie de sorte à définir un angle Θ désiré. En effet, suivant l'utilisation du robot un angle Θ différent qu'un angle égal à 90° pourrait être utilisé. Il est clair de cette description que l'on indique que la longueur de la troisième bielle 43 est réglable mais ce réglage reste fixe lors de l'utilisation du robot 1. Dans le cadre où la longueur L de la troisième bielle 43 est modifié pour modifier l'angle Θ, la longueur L de la troisième bielle 43 n'est pas égale à la longueur L de la première bielle 41 ou de la longueur L de la deuxième bielle 42.

Selon un exemple, le robot 1 peut comprendre une quatrième bielle. La quatrième bielle peut alors avoir les mêmes fonctions que la troisième bielle 43. La quatrième bielle 43 peut alors être reliée à l'autre parmi le premier élément de déplacement 50a ou le deuxième élément de déplacement 50b. Dans ce cas, la troisième bielle 43 et la quatrième bielle devront être réglables en longueur pour éviter tout hyperstatisme. La redondance augmente la rigidité.

### La plateforme 30 :

La plateforme mobile 30 présente, par exemple, une forme parallélépipédique. Plus précisément, la plateforme mobile 30 peut présenter une forme cubique. Ainsi la plateforme mobile 30 peut présenter six faces. La plateforme 30 présente avantageusement une forme de dimensions inférieures à une dimension transversale d'un tuyau 2.

Selon un exemple, la plateforme mobile 30 présente au moins une de ses six faces positionnée perpendiculairement à l'axe longitudinal principal X. Avantageusement, cette face est toujours positionnée dans un plan perpendiculaire à l'axe longitudinal lors des déplacements en translation des éléments de déplacement 50a, 50b et lors de la rotation R du deuxième bâti 20. De préférence, la plateforme mobile 30 présente au moins deux faces positionnées perpendiculairement à l'axe longitudinal principal.

La plateforme mobile 30 comprend avantageusement un effecteur 31. L'effecteur 31 peut présenter une forme de fraise boule. L'effecteur 31 peut être motorisé dans la plateforme 30. L'effecteur 31 peut également, selon un autre exemple, être motorisé par un moteur positionné à l'extérieur de la plateforme 30. Par exemple, le moteur peut être relié à un arbre flexible avec un renvoi d'angle.

Selon un exemple, l'effecteur 31 s'étend depuis une face de la plateforme mobile 30. L'effecteur 31 s'étend préférentiellement suivant une direction orthogonale à l'axe longitudinal principal X. Ainsi, avantageusement, l'effecteur 31 s'étend depuis une face positionnée dans un plan qui contient l'axe longitudinal principal X de la plateforme 30. Ainsi, une fraise de l'effecteur 31 est positionnée de sorte à être dirigé vers la paroi interne du tuyau lors du fonctionnement du robot 1. L'effecteur 31 permet ainsi de réaliser un usinage de la paroi interne d'un tuyau. Par exemple, l'effecteur 31, sous forme de fraise boule peut réaliser une ouverture traversante dans un tuyau tel que représenté sur les figures 1 à 3.

Lors du fonctionnement du robot 1, la rotation de la plateforme 30 est réalisée par la rotation R du deuxième bâti 20 par rapport au premier bâti 10. La rotation de la plateforme mobile 30 peut alors être réalisée par un actionneur pris parmi un moteur avec réduction coaxial sans jeu à haut rapport de réduction ou un moteur couple-long en direct drive. De manière similaire, la rotation R du deuxième bâti 20 est réalisée par un actionneur pris parmi un moteur avec réduction coaxial sans jeu à haut rapport de réduction ou un moteur couple-long en direct drive. Ainsi, l'actionneur de cette rotation R doit être sans jeu et doit permettre de fournir les efforts suffisants à l'usinage.

### Les éléments de liaisons 50c :

Selon un exemple, la première 41, la deuxième 42 et la troisième 43 bielle sont reliées par leurs deuxième extrémités à au moins un élément de liaison 50c. Plus précisément, chaque première 41, deuxième 42 et troisième 43 bielle est reliée par une liaison pivot à un élément de liaison 50c. La liaison pivot présente un axe de rotation autour d'un axe orthogonal à l'axe longitudinal principal X.

Il est clair de la description que chacune des liaisons pivot présente un axe de rotation autour d'un axe orthogonal à l'axe longitudinal principal X. Chacune des liaisons pivot des première 41, deuxième 42 et troisième 43 bielles sont parallèles entre-elles.

Afin d'assurer le déplacement de la plateforme mobile 30, au moins deux éléments de liaison 50c peuvent être positionnés sur deux faces différentes de la plateforme mobile 30. Plus précisément, au moins deux éléments de liaison 50c sont positionnés sur deux faces opposées. Ces deux faces sont de préférence positionnées dans un plan parallèle à l'axe longitudinale principal X. Selon un exemple, les au moins deux éléments précédents sont reliés à la deuxième extrémité de la première 41 et de la deuxième 42 bielle.

Selon un exemple, au moins un autre élément additionnel de liaison 50c est positionné sur une autre face de la plateforme 30. L'au moins un autre élément additionnel de liaison 50c est positionnée sur une face qui s'étend dans un plan perpendiculaire à l'axe longitudinal principal X. L'au moins un autre élément additionnel de liaison 50c est relié à la deuxième extrémité de la troisième bielle 43. La troisième bielle 43 permet de maintenir une rigidité suffisante et ainsi maintenir la plateforme 30 avec la face comprenant l'au moins un autre élément additionnel de liaison 50c positionnée, par exemple perpendiculairement, à l'axe longitudinal principal X lors des mouvements en translations des éléments de déplacements 50a, 50b et lors des mouvements en rotation du deuxième bâti 20 par rapport au premier bâti 10.

### Le système 3 :

Selon un mode de réalisation, le robot 1 est principalement utilisé dans le cadre d'entretien de paroi interne du tuyau déjà positionné. Ainsi, un autre aspect de l'invention concerne un système 3 de fraisage de tuyauterie comprenant un tuyau et un robot parallèle 1 tel que décrit précédemment.

Le premier bâti 10 peut alors être positionné et maintenu fixement par rapport au tuyau 2. Le premier bâti 10 peut être, par exemple, maintenu directement sur le tuyau. Le premier bâti 10 peut également, selon un autre exemple, être maintenu par un dispositif externe positionné de sorte à axer le robot 1 avec son axe longitudinal principal X s'étendant de manière confondue avec un axe longitudinal du tuyau 2.

L'invention n'est pas limitée aux modes de réalisations précédemment décrits et s'étend à tous les modes de réalisation couverts par l'invention.

### REFERENCES NUMERIQUES

1. Robot parallèle
10. Premier bâti
20. Deuxième bâti
30. Plateforme mobile
31 : Effecteur
40. Pluralité de bielles
41. Première bielle
42. Deuxième bielle
43. Troisième bielle
50a. premier élément de déplacement
50b. deuxième élément de déplacement
50c. élément de liaison
60 : élément de fraisage
2 : tuyau
3 : système
T : translation
R : rotation du deuxième bâti par rapport au premier bâti
Y : axe longitudinal principal
Θ : angle d'inclinaison de la plateforme mobile

## Revendications

1. Robot parallèle (1) s'étendant suivant un axe longitudinal principal (X), **caractérisé en ce qu'**il comprend :
• un premier bâti (10) s'étendant suivant l'axe longitudinal principal (X),
• un deuxième bâti (20) monté sur le premier bâti (10) avec une liaison pivot selon l'axe longitudinal principal (X),
• une plateforme mobile (30) reliée au deuxième bâti (20) par une première bielle (41), une deuxième bielle (42) et une troisième bielle (43), chaque bielle (41, 42, 43) étant articulée par une première extrémité sur le deuxième bâti (20) et par une deuxième extrémité sur la plateforme mobile (30),
• un premier élément de déplacement (50a) et un deuxième élément de déplacement (50b), le premier (50a) élément de déplacement étant relié par une liaison pivot à la première extrémité de la première bielle (41) et étant également relié par une liaison glissière au deuxième bâti (20) et le deuxième (50b) élément de déplacement étant relié par une liaison pivot à la première extrémité de la deuxième bielle (42) et étant également relié par une liaison glissière au deuxième bâti (20), chacune desdites liaisons glissières étant configurée pour permettre une translation de la première extrémité de la première bielle et de la deuxième bielle parallèlement à l'axe longitudinal principal (X),
les deuxièmes extrémités respectives de la première (41) et de la deuxième (42) bielle étant chacune articulée sur la plateforme mobile (30) par une liaison pivot respective et reliée à au moins un élément de liaison (50c) fixé sur ladite plateforme, la troisième bielle (43) étant reliée par sa première extrémité par une liaison pivot à l'un parmi le premier élément de déplacement (50a) ou le deuxième élément de déplacement (50b) et par une liaison pivot de sa deuxième extrémité à un élément de liaison (50c) de la plateforme mobile (30), chaque liaison pivot présentant un axe de rotation, les axes de rotations des liaisons pivots des premières (41), deuxième (42) et troisième (43) bielles étant tous parallèles entre eux et étant orthogonaux à l'axe longitudinal principal (X) de sorte que le déplacement des premier (50a) et deuxième (50b) éléments de déplacement permet de déplacer la plateforme mobile (30) dans un plan qui comprend l'axe longitudinal principal (X) et dont la normale est parallèle aux axes de rotation des liaisons pivots des premières (41), deuxième (42 et troisième (43) bielles, et
le déplacement du deuxième bâti (20) par rapport au premier bâti permettant de réaliser une rotation (R) de la plateforme mobile (30) dans un plan orthogonal à l'axe longitudinal principal (X), par rapport au premier bâti (10).

2. Robot parallèle (1) selon l'une quelconque des revendications précédentes dans lequel, la troisième bielle (43) est configurée pour maintenir un effecteur (31) du robot (1) porté par la plateforme mobile (30) orienté dans une direction qui présente un angle (Θ) fixe par rapport à l'axe longitudinal principal (X).

3. Robot parallèle (1) selon l'une quelconque des revendications précédentes, dans lequel le premier bâti (10) et le deuxième bâti (20) sont cylindriques, le deuxième bâti (20) entourant le premier bâti (10).

4. Robot parallèle (1) selon l'une quelconque des revendications précédentes, dans lequel la liaison pivot entre le premier bâti (10) et le deuxième bâti (20) est réalisé par deux roulements à contact obliques montés en « O ».

5. Robot parallèle (1) selon l'une quelconque des revendications précédentes, dans lequel la rotation de la plateforme mobile (30) est réalisée par un actionneur pris parmi un moteur avec réduction coaxial sans jeu à haut rapport de réduction ou un moteur couple-long en direct drive.

6. Robot parallèle (1) selon l'une quelconque des revendications précédentes dans lequel le premier (50a) et le deuxième élément (50b) de déplacement sont pris parmi des vérins électriques ou des moteurs linéaires.

7. Robot parallèle (1) selon l'une quelconque des revendications précédentes, dans lequel les premier (50a) et deuxième (50b) élément de déplacement sont configurés pour être guidés en translation par des rails à billes ou deux douilles à billes installées en parallèles.

8. Robot parallèle (1) selon l'une quelconque des revendications précédentes dans lequel les première (41), deuxième (42) et troisième (43) bielles s'étendent entre leur première extrémité et leur deuxième extrémité sur une longueur L, avec la longueur L fixe.

9. Robot parallèle (1) selon l'une quelconque des revendications précédentes dans lequel la plateforme mobile (30) comprend un effecteur (31), l'effecteur (31) s'étendant suivant une direction perpendiculaire à l'axe longitudinal principal (X) et étant configuré pour réaliser un usinage d'un tuyau.

10. Système (3) de fraisage de tuyauterie comprenant un tuyau (2) et un robot parallèle (1) selon l'une quelconque des revendications précédentes dans lequel le premier bâti (10) est positionné et maintenu fixement par rapport au tuyau (2).
